# EUROPEAN PATENT SPECIFICATION

(11) **EP 2 456 817 B1**
(45) Date of publication and mention of the grant of the patent: **29.05.2013**
(21) Application number: 10741926.9
(22) Date of filing: 21.07.2010
(51) Int. Cl.: C08K 5/5397, C08K 5/5398, C08L 63/00, C08J 5/24

(54) **DERIVATIVES OF DIPHOSPHINES AS FLAME RETARDANTS IN AROMATIC AND/OR HETEROAROMATIC EPOXY RESINS**
DIPHOSPHINDERIVATE ALS FLAMMHEMMER IN AROMATISCHEN UND/ODER HETEROAROMATISCHEN EPOXIDHARZEN
DÉRIVÉS DE DIPHOSPHINES EN TANT QU IGNIFUGEANTS DANS DES RÉSINES ÉPOXY AROMATIQUES ET/OU HÉTÉROAROMATIQUES

(30) Priority: 24.07.2009 EP 09166310
(43) Date of publication of application: 30.05.2012
(73) Proprietor: BASF SE, 67056 Ludwigshafen (DE)
(72) Inventor: DENECKE, Hartmut, 67071 Ludwigshafen (DE); TISHKOV, Alexander, Moskau 11729 (RU); GUTFRUCHT, Norbert, 67466 Lambrecht (DE); HERBST, Heinz, 79541 Lörrach (DE); MAASE, Matthias, 67346 Speyer (DE); XALTER, Rainer, CH-4058 Basel (CH); FLECKENSTEIN, Christoph, 63579 Freigericht (DE)
(86) International application number: PCT/EP2010/060513
(87) International publication number: WO 2011/009876

(56) References cited:
- EP-A2- 1 116 774
- WO-A1-2009/112349
- GB-A- 1 281 877
- JP-A- 9 255 851
- US-A- 4 082 724
- DATABASE WPI Week 199442 Thomson Scientific, London, GB; AN 1994-338311 XP002084970 -& JP 6 263809 A (DSM NV) 20 September 1994 (1994-09-20)

## Description

The present invention is related to the use of specific derivatives of diphosphines as flame retardants in aromatic and/or heteroaromatic epoxy resins and to a method for reducing the flammability of organic material comprising aromatic and/or heteroaromatic epoxy resins in which the specific derivates of diphosphines are incorporated. Moreover, the invention is related to an aromatic and/or heteroaromatic epoxy resin composition containing aromatic and/or heteroaromatic epoxy resin as such or in processed form and incorporated in the aromatic and/or heteroaromatic epoxy resin at least one of the derivatives of diphosphines in an amount of from 1 to 35% by weight, based on the weight of the aromatic and/or heteroaromatic epoxy resin.

Flame resistance is a desirable property for organic materials, such as wood, primarily timber, paper, paperboard, textiles, flammable performance liquids and in particular polymeric materials. In some applications, flame resistance is given first priority due to the danger to human beings and material assets, for example in structural materials for airplane and motor vehicle construction and for public transportation vehicles. In electronic applications, flame resistance is necessary because the components may generate localized high temperatures and electric sparks. Therefore, a high level of flame/fire protection is required.

Accordingly, it has been customary to incorporate into organic materials and in particular into aromatic and/or heteroaromatic epoxy resins flame retardants.

The flame retardant market today is comprised of products which function to interfere with the combustion process by chemical and/or physical means. Mechanistically, these flame retardants have been proposed to function during combustion of an article either in the gas phase, the condensed phase or both.

The most common flame retardants thus far used commercially have been halogen containing compounds such as tetrabromobisphenol A, decabromodiphenyl oxide, decabromodiphenyl ethane, brominated carbonate oligomers, brominated epoxy oligomers, and poly(bromostyrenes). The organ halogens are proposed to generate halogen species (e.g. HY) which interfere in the gas phase with free radical organic "fuel" from the polymer substrate.

Generally, halogen containing fire retardants such as those listed above are considered to be safe and effective. However, there has been increasing interest to utilize halogen-free flame retarding substances. It is desirable for the materials equipped with these compounds to be able to meet the requirements of fire retardancy and to display the same or better properties, such as mechanical resistance, toughness, solvent and moisture resistance, etc. that is offered with the halogenated materials currently used.

Many different approaches have been investigated to flame retard organic polymers without the use of halogens which are described in Journal of Fire Sciences 24, 345-364, 2006; Journal of Fire Sciences 22, 251-264, 2004; Polymer International 54, 11-35, 2005 and Polymer International 54, 981-998, 2005.

One general approach to using non-halogen flame retardants in organic polymer materials is by the use of phosphorus-based flame retardants. In epoxy systems, use of 9,10-dihydro-9-oxa-10-phosphaphenathrene (DOPO) is well-established. Furthermore, the use of various salts of dialkylphosphinic acids has been promoted by Clariant under the Exolit^{®} OP series.

Medsker, II et al. describes in US 5,436,280 the use of bi(phospine oxides) and bi(phosphines sulfides) in other organic comprising vinyl monomers which can function as photoinitiators and chain transfer agents in the polymerization of vinyl monomers. The use of compounds of formula I and II as flame retardants in aromatic and/or heteroaromatic epoxy resins are not described.

T. Uozumi et al describes in JP-A 2004-75729 the use of tetraphenyldiphosphine monoxide and tetraphenyldiphosphine dioxides as flame retardants in polycarbonates and polystyrene. The use of these flame retardants in other organic materials such as epoxy resins is described. The use of compounds of formula I and II in aromatic and/or heteroaromatic epoxy resins are not described.

It is an object of the present invention to provide halogen-free flame retardants which can be applied in aromatic and/or heteroaromatic epoxy resins and which are effective and economic and which do not show the disadvantages of the known systems. Typical disadvantages of halogenated flame retardants are such as discoloration issues, problems during recycling (development of toxic side products during the recycling process; the waste electrical and electronic equipment (WEEE) directive requires all materials containing bromine to be marked and treated separately at the end of life), halogenated flame retarding (FR) are typically used together with synergists like antimony oxide or borates which trigger toxicological and environmental, health and safety (EHS) concerns, too. Additionally, consumer electronics often require environmental labels (Blue Angel, etc.) which ask for halogen free formulations.

It has been found that specific derivatives of diphosphines impart good flame retarding properties to materials equipped therewith.

Accordingly, the present invention relates to the use of at least one diphosphine of the formula I or II or a mixture of both 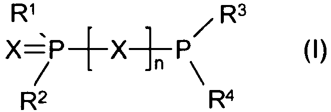 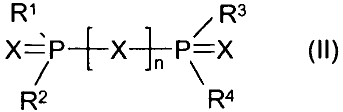 wherein
- R¹ - R⁴: is independently selected from the group of substituted and/ or unsubstituted C₆-C₁₂-aryl, substituted and/or unsubstituted C₆-C₁₂-arylthio and substituted and/or unsubstituted C₆-C₁₂-aryloxy,
- X: is an element independently selected from oxygen and sulphur and
- n: is 0, 1 or 2, wherein X is only sulphur if n is 2 and n is only 0 in formula II, if R¹-R⁴ is C₆-C₁₂ aryloxy,
as flame retardants in aromatic and/or heteroaromatic epoxy resins or aromatic and/or heteroaromatic epoxy resins containing materials.

In the terms of the present invention, flame retardants are understood to be substances which reduce the flammability of substrates which are equipped with them. They are active during the starting phase of a fire by enhancing the resistance of the flame-retarded material to decomposition by thermal stress and/or by preventing the spread of a source of ignition to the flame-retarded material, thus preventing, delaying or inhibiting the spread of a fire.

C₆-C₁₂-aryl for R¹-R⁴ in formula I and II refers to phenyl, biphenyl or naphthyl. The aryl group is either unsubstituted or carries 1 to 3 substituents. Suitable substituents comprise hydroxy, NO₂, C₁-C₄-alkyl such as methyl, ethyl, n-propyl, isopropyl, n-butyl, isobutyl, or tert-butyl, C₁-C₄-alkoxy, phenyl, biphenyl, naphthyl, NR^{a}R^{b}, CORₐ, COOR^{a} and CONR^{a}R^{b}, where each R^{a} and R^{b} is independently selected from H and C₁-C₄-alkyl. Preferably, aryl is unsubstituted.

C₆-C₁₂-aryloxy for R¹-R⁴ in formula I and II is C₆-C₁₂-aryl as defined above bonded through an oxygen atom. One example is phenoxy.

C₆-C₁₂-arylthio is C₆-C₁₂-aryl as defined above bonded through a sulfur atom. One example is phenylthio.

With respect to the use according to the invention of the compounds of formula I and/or II, preference is given to the embodiments described below, in each case on their own or in combination with each other.

In preferred formula I and II, each R¹ is independently selected from the group consisting of C₆-C₁₂-aryl. More preferably, each R¹ is substituted or unsubstituted phenyl, biphenyl or naphthyl. Preferably, C₆-C₁₂-aryl is unsubstituted, i.e. it is unsubstituted phenyl, unsubstituted biphenyl or unsubstituted naphthyl.

Particularly, in formula I and II, all groups R¹ have the same meaning.

In one preferred embodiment, R¹ - R⁴ are aryl-groups. In a particularly preferred embodiment, the compound of formula I comprises as R¹ - R⁴ phenyl groups.

Compounds of formula I with X = O and n = 0 can be produced in accordance with known processes for the preparation of tetraphenyldiphosphine monoxide, e.g. as described in J. Chem. Soc. 1965, 3500; Zh. Obshch. Khim. 1979, 49, 2418; the contents of which are hereby fully incorporated by reference. Suitable methods are for example reacting a diaryl halogenophosphine with diaryl alkoxyphosphine of the formula 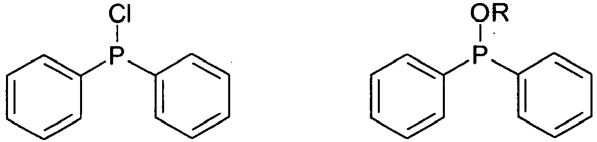 where R is a an alkyl group. The reaction is generally carried out in a suitable solvent or without the solvent. Suitable solvents are acyclic ethers, such as diethyl ether, dipropyl ether, diisopropyl ether, dibutyl ether, diisobutyl ether, methyl-tert-butyl ether, ethyl-tert-butyl ether and the like, cyclic ethers, such as tetrahydrofuran and 1,4-dioxane, and aprotic aromatic solvents, such as benzene, toluene, or the xylenes. Preferred is the production of the product in the presence of excess of liquid diaryl alkoxyphosphine. The diaryl halogenophosphine and the diaryl alkoxyphosphine are preferably used in a molar ratio of from 0.5:1 to 1:5, more preferably from 0.8:1 to 1:3, even more preferably from 0.9:1 to 1:2.6. The reaction temperature is preferably 0 to 150°C or 20 to 130°C. After completion of the reaction, the reaction mixture is in general freed from the solvent used and from unreacted starting material, e.g. by filtration and evaporation of the solvent. The obtained product can be used as such or be further purified. Purification can be carried out by known methods, e.g. by washing or digesting the residue with non-solvents or by recrystallization, the latter being preferred. Recrystallization is carried out in a suitable solvent, generally at elevated temperature, e.g. at the boiling point of the mixture. Suitable solvents are aprotic or protic in the absence of air. Examples are aromatic solvents, such as benzene, toluene or the xylenes, cycloaliphatic solvents, such as cyclopentane, cyclohexane or methylcyclohexane, and carbonic acid derivatives, such as ethyl acetate, ethyl propionate or propyl acetate; methanol, ethanol, isopropanol, water or mixtures thereof. Preferably, aromatic solvents are used, specifically toluene.

Compounds of formula I and II with X = S and n = 0 or 1 can be produced in accordance with known processes as described in Chem. Ber. 1990, 123, 1313-1317 by M. Gruber et al., in Amer. Chem. Soc. 1956, 78, 4447-4450 by T.R. Hopkins et al., in Zhournal Obschei Khimii. 1980, 50, 1, 24-30 by M.G. Zimin et al., in Chem. Ber. 1958, 91, 2871-2877 by W. Kuchen et al. and in J. Chem. Soc., 1965, 3500-3501 by J. McKechnie et al.

In the terms of the present invention, aromatic and/or heteroaromatic epoxy resins or epoxy composites or epoxy blends comprise aromatic and/or heteroaromatic compounds that include epoxide groups. These aromatic and/or heteroaromatic compounds may comprise a polyfunctional epoxide compound, wherein at least two epoxy groups of the partial formula (A) 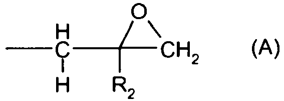 are present, which are attached directly to carbon, oxygen, nitrogen or sulphur atoms, and wherein R₂ represents hydrogen or methyl.

Examples of polyfunctional aromatic and/or heteroaromatic epoxide compounds are:
I) Polyglycidyl esters and poly(β-methylglycidyl) esters obtainable by reacting a aromatic and/or heteroaromatic compound having at least two carboxyl groups in the molecule with epichlorohydrin and/or glyceroldichlorohydrin and/or β-methylepichlorohydrin. The reaction is carried out in the presence of bases. Suitable aromatic and/or heteroaromatic compounds having at least two carboxyl groups in the molecule are phthalic, isophthalic, trimellitic and pyromellitic acid.
II) Polyglycidyl ethers or poly(β-methylglycidyl) ethers obtainable by reacting a aromatic and/or heteroaromatic compound having at least two free phenolic hydroxyl groups with a suitably substituted epichlorohydrin under alkaline conditions or in the presence of an acidic catalyst with subsequent treatment under alkaline conditions.
   Ethers of this type are derived, for example, from mononuclear phenols, such as resorcinol or hydroquinone; or they are based on polynuclear phenols, such as bis(4-hydroxyphenyl)methane, 2,2-bis(4-hydroxyphenyl)propane, 2,2-bis(3,5-dibromo-4-hydroxyphenyl)-propane or 4,4'-dihydroxydiphenyl sulphone, or on condensates of phenols with formaldehyde that are obtained under acidic conditions, such as phenol Novolak^{®}.
III) Poly(N-glycidyl) compounds obtainable by dehydrochlorinating the reaction products of epichlorohydrin with aromatic and/or heteroaromatic amines containing at least two amino hydrogen atoms. These amines are, for example, aniline, toluidine, bis(4-aminophenyl)methane, m-xylylenediamine or bis(4-methylaminophenyl)methane, and also N,N,O-triglycidyl-m-aminophenol or N,N,O-triglycidyl-p-aminophenol.
IV) Poly(S-glycidyl) compounds, such as di-S-glycidyl derivatives derived from aromatic and/or heteroaromatic dithiols, such as bis(4-mercaptomethylphenyl)ether.

Polyfunctional aromatic and/or heteroaromatic epoxide compounds are known. Many of them are commercially available from Huntsman Advanced Materials (brand name Araldite^{®}), Dow Chemicals (brand name DER^{®}), Mitsubishi Gas Chemical Company (brand name Tetrad^{®}), Shell (brand name Cardura^{®}) and Hexion Specialty Chemicals (Hexion^{®}, Tactix^{®}, Epon^{®} and Epikot^{®}). Examples of suitable polyfunctional epoxides are:
a) Liquid bisphenol A diglycidyl ethers, such as ARALDITE^{®} GY 240, ARALDITE^{®} GY 250, ARALDITE^{®} GY 260, ARALDITE^{®} GY 266, ARALDITE^{®} LY 1556, ARALDITE^{®} GY 2600, ARALDITE^{®} MY 790, DER^{®} 332, DER^{®} 331, Hexion^{®} EPR 158, Tactix^{®} 123, Tactix^{®} 138, Epon^{®} 826;
b) Solid bisphenol A diglycidyl ethers such as ARALDITE^{®} GT 6071, ARALDITE^{®} GT 7071, ARALDITE^{®} GT 7072, ARALDITE^{®} GT 6063, ARALDITE^{®} GT 7203, ARALDITE^{®} GT 6064, ARALDITE^{®} GT 7304, ARALDITE^{®} GT 7004, ARALDITE^{®} GT 6084, ARALDITE GT^{®} 1999, ARALDITE^{®} GT 7077, ARALDITE^{®} GT 6097, ARALDITE^{®} GT 7097, ARALDITE GT^{®} 7008, ARALDITE^{®} GT 6099, ARALDITE^{®} GT 6608, ARALDITE^{®} GT 6609, ARALDITE^{®} GT 6610, ARALDITE^{®} CT 200, ARALDITE^{®} 6100 ES, Epikote^{®} 1001, Epikote^{®} 109, DER^{®} 661, DER^{®} 667, DER^{®} 668, DLS 1065 ES;
c) Liquid bisphenol F diglycidyl ethers, such as ARALDITE^{®} GY 281, ARALDITE^{®} GY 282, ARALDITE^{®} PY 302, ARALDITE^{®} PY 306;
d) Solid polyglycidyl ethers of tetraphenylethane, such as CG Epoxy Resin 0163;
e) Solid and liquid polyglycidyl ethers of phenol-formaldehyde Novolak^{®}, such as EPN 1138, EPN 1139, GY 1180, PY 307, Epon^{®} 828, Tactix^{®} 556;
f) Solid and liquid polyglycidyl ethers of o-cresol-formaldehyde NOVOLAK, such as ECN 1235, ECN 1273, ECN 1280, ECN 1299;
g) Liquid glycidyl ethers of carboxylic acids, such as Shell Cardura^{®} E terephthalic ester, trimellitic ester, ARALDITE^{®} PY 284;
h) Solid heterocyclic epoxy resins (triglycidyl isocyanurate), such as ARALDITE^{®} PT 810;
i) Liquid N,N,O-triglycidyl ethers of p-aminophenol, such as ARALDITE^{®} MY 0510;
j) Tetraglycidyl-4,4'-methylenebenzamine or N,N,N',N'-tetraglycidyldiaminophenylmethane, such as ARALDITE^{®} MY 720, ARALDITE^{®} MY 721.
k) Tetraglycidyl-derivat vom m-Xylidendiamine, such as Tetrad^{®}-X
l) Triglycidyl-derivat vom 1,1,2,-tris(4-hydroxyphenyl)ethan, such as Tactix^{®} 742.

If desired, a mixture of aromatic and/or heteroaromatic epoxy compounds of different structure can also be employed.

Suitable polyfunctional aromatic and/or heteroaromatic epoxide compounds preferably comprise at least two groups of the formula

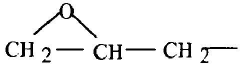

Particular preference as component is given to the following compounds of types and/or mixtures of them

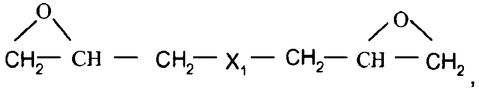

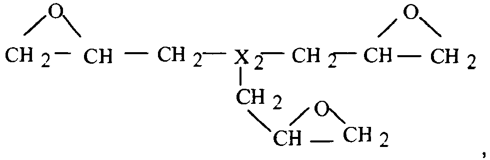

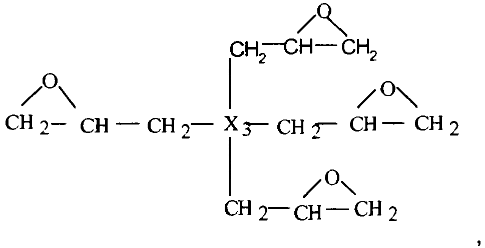

Wherein X₁, X₂ and X₃ are phenylene or naphthylene which can be unsubstituted or substituted and X₂ is additionally an unsubstituted or substituted radical of the partial formula

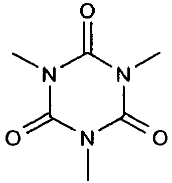

Suitable substituents for the above mentioned radicals are -O-, -S-, -C(=O)-, -C(=O)-O-, -S(=O)=, -S(O₂)-, -C(CF₃)₂-, alkyl, alkylene, aryl, arylene, alkoxy, aryloxy or halogen. Identical or different substituents may be present two or more times, whereas the substituents themselves may likewise be further substituted.

An example of a suitable alkyl radical is a C₁-C₁₈alkyl radical, such as methyl, ethyl, n-propyl, isopropyl, n-butyl, sec-butyl, tert-butyl, n-hexyl, n-octyl, 2-ethylhexyl, n-nonyl, n-decyl, n-undecyl, n-dodecyl, n-tridecyl, n-tetradecyl, n-hexadecyl or n-octadecyl, and their branched isomers.

Possible alkylene and alkoxy radicals can be derived formally from the above-mentioned alkyl radicals by removing a further hydrogen atom or, respectively, by adding an oxygen atom.

Examples of suitable aryl radicals are those having 6-20 carbon atoms, such as phenylene, biphenylene or naphthylene.

Possible arylene and aryloxy radicals can be derived formally from the abovementioned aryl radicals by removing a further hydrogen atom or, respectively, by adding an oxygen atom.

Preference is given to radicals of the following formulae:
for X₁: 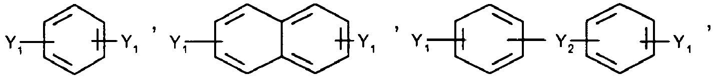 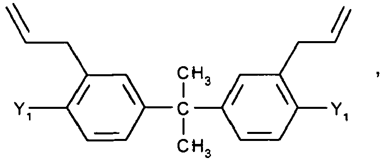 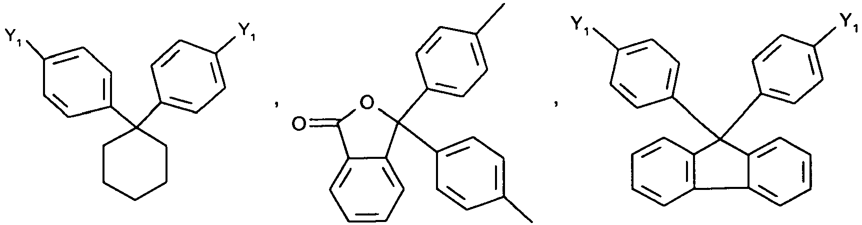 or
for X₂ : 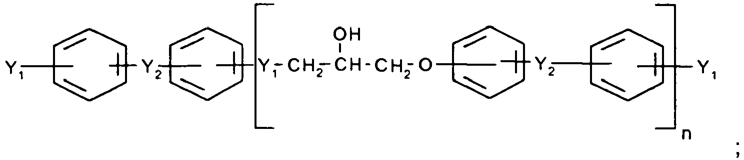 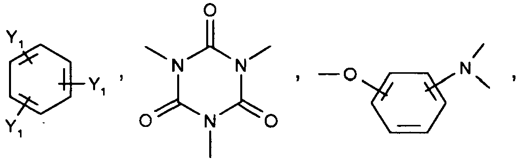 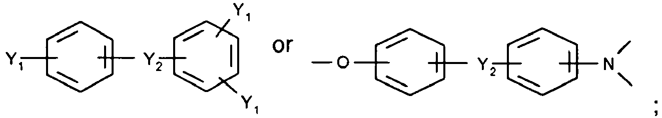
for X₃: 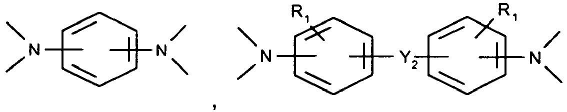 or 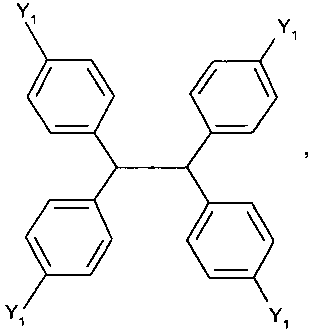
in which
Y₁ is a direct bond or the groups -O-, -S- or -C(=O)-O-;
Y₂ is a direct bond or the groups -SO₂-, -CO-, -S-, -SO-, CH₂-, -C(CH₃)₂- or -C(CF₃)₂-; and n is 1-10.

The aromatic groups are unsubstituted or substituted one or more times by alkyl, aryl, alkoxy, aryloxy or halogen, as described in more detail above.

Particular preference is given to the following compounds:

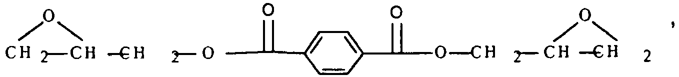

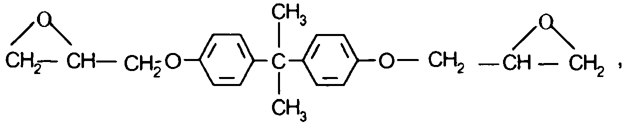

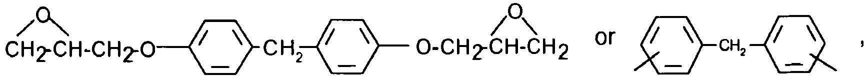

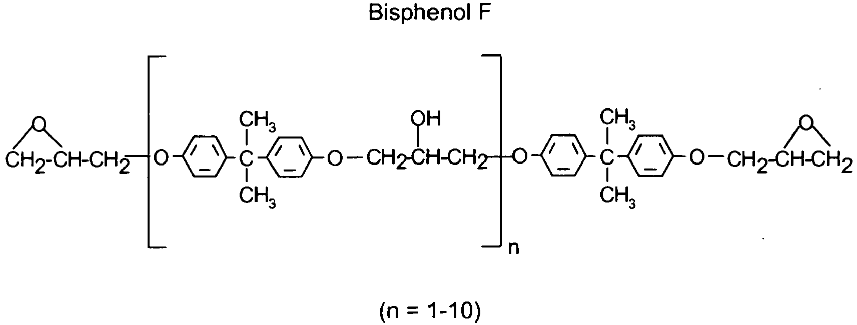

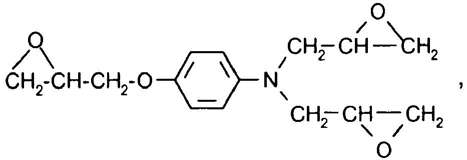

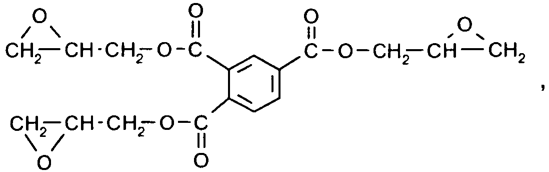

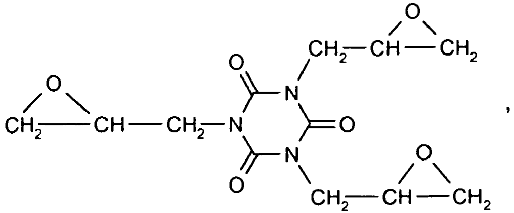

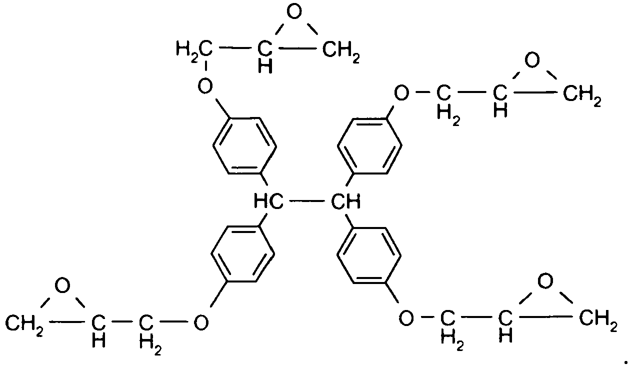

According to a preferred embodiment, a hardener component may be present in the aromatic and/or heteroaromatic epoxy resin composition or in the composition that includes the aromatic and/or heteroaromatic epoxy resin composition and further polymerizable monomers. A suitable hardener compound is any of the known hardeners for aromatic and/or heteroaromatic epoxy resins. The amine and anhydride hardeners are particularly preferred, such as polyamines, e.g. ethylenediamine, diethylenetriamine, triethylenetriamine, hexamethylenediamine, methanediamine, N-aminoethylpiperazine, diaminodiphenylmethane [DDM], alkyl-substituted derivatives of DDM, iso-phoronediamine [IPD], diaminodiphenylsulphone [DDS], 4,4'-methylenedianiline [MDA], or m-phenylenediamine [MPDA]), polyamides, alkyl/alkenylimidazoles, dicyandiamide [DICY], 1,6-hexamethylene-bis-cyanoguanidine, or acid anhydrides, e.g. do-decenylsuccinic acid anhydride, hexahydrophthalic acid anhydride, tetrahydrophthalic acid anhydride, phthalic acid anhydride, pyromellitic acid anhydride, and derivatives thereof.

An other subject of the invention is an aromatic and/or heteroaromatic epoxy resin composition comprising b) at least one aromatic and/or heteroaromatic epoxy resin and/or aromatic and/or heteroaromatic epoxy resin containing material and a) at least one diphosphine of the formula I and/or II.

The aromatic and/or heteroaromatic epoxy resin composition of compound a) and b) may comprise further conventional additives.

Suitable conventional additives comprise e.g. antioxidants, UV absorbers/light stabilizers, metal deactivators, antistatic agents, reinforcing agents, fillers, biocides, lubricants, emulsifiers, colorants, pigments, rheology additives, mold release agents, catalysts, flow-control agents, optical brighteners, further flame retardants (different from the cyclic or polymeric aryl phosphines of the invention), antidripping agents and blowing agents.

The antioxidants, light stabilizers, and metal deactivators that are optionally used have a high migration fastness and temperature resistance. Suitable antioxidants, UV ab sorbers/light stabilizers, and metal deactivators are selected, for example, from groups a) to r). The compounds of groups a) to g) and i) represent UV absorbers/light stabilizers, whereas compounds of groups j) to r) work in particular as stabilizers and group s) represent other additives which modify mechanical properties as impact modifiers :
a) 4,4-diarylbutadienes,
b) cinnamic esters,
c) benzotriazoles,
d) hydroxybenzophenones,
e) diphenylcyanoacrylates,
f) oxalic diamides,
g) 2-phenyl-1,3,5-triazines;
h) antioxidants,
i) sterically hindered amines,
j) metal deactivators,
k) phosphites and phosphonites,
l) hydroxylamines,
m) nitrones,
n) amine oxides,
o) benzofuranones and indolinones,
p) thiosynergists,
q) peroxide scavengers,
r) basic costabilizers
s) impact modifier.

Group a) of the 4,4-diarylbutadienes includes for example compounds of the formula A.

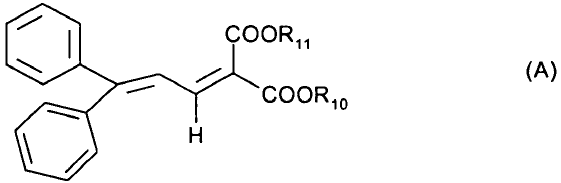

The compounds are known from EP-A-916 335. The substituents R₁₀ and/or R₁₁ are preferably C₁-C₈ alkyl and C₅-C₈ cycloalkyl.

Group b) of the cinnamic esters includes for example isoamyl 4-methoxycinnamate, 2-ethylhexyl 4-methoxycinnamate, methyl α-methoxycarbonylcinnamate, methyl α-cyano-β-methyl-p-methoxycinnamate, butyl α-cyano-β-methyl-p-methoxycinnamate, and methyl α-methoxycarbonyl-p-methoxycinnamate.

Group c) of the benzotriazoles includes for example 2-(2'-hydroxyphenyl)-benzotriazoles such as 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)-benzotriazole, 2-(3',5'-bis-(α,α-dimethylbenzyl)-2'-hydroxyphenyl)benzotriazole, 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole and 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazol-2-ylphenol]; the product of esterifying 2-[3'-tert-butyl-5'-(2-methoxycarbonylethyl)-2'-hydroxyphenyl]-2H-benzotriazole with polyethylene glycol 300; [R-CH₂CH₂-COO(CH₂)₃]₂ where R = 3'-tert-butyl-4'-hydroxy-5'-2H-benzotriazol-2-ylphenyl, and mixtures thereof.

Group d) of the hydroxybenzophenones includes for example 2-hydroxybenzophenones such as 2-hydroxy-4-methoxybenzophenone, 2,2'-dihydroxy-4-methoxybenzophenone, 2,4-dihydroxybenzophenone, 2,2',4,4'-tetrahydroxybenzophenone, 2,2'-dihydroxy-4,4'-dimethoxybenzophenone, 2,2'-dihydroxy-4,4'-dimethoxybenzophenone, 2-hydroxy-4-(2-ethylhexyloxy)benzophenone, 2-hydroxy-4-(n-octyl-oxy)benzophenone, 2-hydroxy-4-methoxy-4'-methylbenzophenone, 2-hydroxy-3-carboxybenzophenone, 2-hydroxy-4-methoxybenzophenone-5-sulfonic acid and its sodium salt, and 2,2'-dihydroxy-4,4'-dimethoxybenzophenone-5,5'-bissulfonic acid and its sodium salt.

Group e) of the diphenylcyanoacrylates includes for example ethyl 2-cyano-3,3-diphenylacrylate, obtainable commercially for example under the name Uvinul^{®} 3035 from BASF SE, Ludwigshafen, Germany, 2-ethylhexyl 2-cyano-3,3-diphenylacrylate, obtainable commercially for example as Uvinul^{®} 3039 from BASF SE, Ludwigshafen, and 1,3-bis[(2'-cyano-3',3'-diphenylacryloyl)oxy]-2,2-bis{[2'-cyano-3',3'-diphenyl-acryloyl)oxy]methyl}propane, obtainable commercially for example under the name Uvinul^{®} 3030 from BASF SE, Ludwigshafen.

Group f) of the oxamides (oxalic diamides) includes for example 4,4'-dioctyloxyoxanilide, 2,2'-diethoxyoxanilide, 2,2'-dioctyloxy-5,5'-di-tert-butyloxanilide, 2,2'-didodecyloxy-5,5'-di-tert-butyloxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butyloxanilide, and also mixtures of ortho-, para-methoxy-disubstituted oxanilides and mixtures of ortho- and para-ethoxy-disubstituted oxanilides.

Group g) of the 2-phenyl-1,3,5-triazines includes for example 2-(2-hydroxyphenyl)-1,3,5-triazines such as 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis-(2,4-dimethylphenyl)-1,3,5-triazine, 2-[2-hydroxy-4-(2-hydroxy-3-butyloxypropoxy)-phenyl]-4,6-bis(2,4-dimethylphenyl)-1,3,5-triazine, 2-[2-hydroxy-4-(2-hydroxy-3-octyloxypropoxy)phenyl]-4,6-bis(2,4-dimethylphenyl)-1,3,5-triazine, 2-[4-(dodecyloxy/tri-decyloxy-2-hyd roxypropoxy)-2-hyd roxyphenyl]-4,6-bis(2,4-d imethylphenyl)-1,3,5-triazine, 2-[2-hydroxy-4-(2-hydroxy-3-dodecyloxypropoxy)phenyl]-4,6-bis-(2,4-dimethylphenyl)-1,3,5-triazine, 2-(2-hydroxy-4-hexyloxyphenyl)-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, and 2-(2-hydroxyphenyl)-4-(4-methoxyphenyl)-6-phenyl-1,3,5-triazine.

Group h) of the antioxidants includes, for example:
h.1) Alkylated monophenols such as, for example, 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, unbranched or sidechain-branched nonylphenols such as, for example, 2,6-dinonyl-4-methylphenol, 2,4-dimethyl-6-(1-methylundec-1-yl)phenol, 2,4-dimethyl-6-(1-methylheptadec-1-yl)phenol, 2,4-dimethyl-6-(1-methyltridec-1-yl)phenol, and mixtures thereof.
h.2) Alkylthiomethylphenols such as, for example, 2,4-dioctylthiomethyl-6-tertbutylphenol, 2,4-dioctylthiomethyl-6-methylphenol, 2,4-dioctylthiomethyl-6-ethylphenol and 2,6-didodecylthiomethyl-4-nonylphenol.
h.3) Hydroquinones and alkylated hydroquinones such as, for example, 2,6-di-tert-butyl-4-methoxyphenol, 2,5-di-tert-butylhydroquinone, 2,5-di-tert-amyl-hydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, and bis-(3,5-di-tert-butyl-4-hydroxyphenyl) adipate.
h.4) Tocopherols, such as, for example, α-tocopherol, β-tocopherol, γ-tocopherol, δ-tocopherol, and mixtures thereof (vitamin E).
h.5) Hydroxylated thiodiphenyl ether such as, for example, 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), and 4,4'-bis(2,6-dimethyl-4-hydroxyphenyl) disulfide.
h.6) Alkylidenebisphenols such as, for example, 2,2'-methylenebis(6-tert-butyl-4-methylphenol), 2,2'-methylenebis(6-tert-butyl-4-ethylphenol), 2,2'-methylene-bis[4-methyl-6-(α-methylcyclohexyl)phenol], 2,2'-methylenebis(4-methyl-6-cyclohexyl phenol), 2,2'-methylenebis(6-nonyl-4-methylphenol), 2,2'-methylene-bis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis-(6-tert-butyl-2-methylphenol), 1,1-bis(5-tert-butyl-4-hydroxy-2-methylphenyl)-butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3-tert-butyl-4-hydroxyphenyl)butyrate], bis(3-tert-butyl-4-hydroxy-5-methyl-phenyl)dicyclopentadiene, bis[2-(3'-tert-butyl-2-hydroxy-5-methylbenzyl)-6-tert-butyl-4-methylphenyl] terephthalate, 1,1-bis(3,5-dimethyl-2-hydroxyphenyl)-butane, 2,2-bis(3,5-di-tert-butyl-4-hydroxyphenyl)propane, 2,2-bis-(5-tert-butyl-4-hydroxy-2-methylphenyl)-4-n-dodecylmercaptobutane, 1,1,5,5-tetra-(5-tert-butyl-4-hydroxy-2-methylphenyl)pentane.
h.7) Benzyl compounds such as, for example, 3,5,3',5'-tetra-tert-butyl-4,4'-dihydroxy-dibenzyl ether, octadecyl 4-hydroxy-3,5-dimethylbenzylmercaptoacetate, tridecyl 4-hydroxy-3,5-di-tert-butylbenzylmercaptoacetate, tris(3,5-di-tert-butyl-4-hydroxybenzyl)amine, 1,3,5-tri(3,5-di-tert-butyl-4-hydroxybenzyl)-2,4,6-trimethylbenzene, di(3,5-di-tert-butyl-4-hydroxybenzyl) sulfide, isooctyl 3,5-di-tert-butyl-4-hydroxy-benzylmercaptoacetate, bis(4-tert-butyl-3-hydroxy-2,6-dimethylbenzyl)dithiol terephthalate, 1,3,5-tris(3,5-di-tert-butyl-4-hydroxybenzyl) isocyanurate, 1,3,5-tris(4-tert-butyl-3-hydroxy-2,6-dimethylbenzyl) isocyanurate, 3,5-di-tert-butyl-4-hydroxybenzyl-phosphoric acid dioctadecyl ester, and 3,5-di-tert-butyl-4-hydroxybenzyl-phosphoric acid monoethyl ester, calcium salt.
h.8) Hydroxybenzylated malonates such as, for example, dioctadecyl 2,2-bis(3,5-di-tert butyl-2-hydroxybenzyl)malonate, dioctadecyl-2-(3-tert-butyl-4-hydroxy-5-methylbenzyl)malonate, didodecyl mercaptoethyl-2,2-bis(3,5-di-tert-butyl-4-hydroxybenzyl)malonate, and bis[4-(1,1,3,3-tetramethylbutyl)phenyl] 2,2-bis(3,5-di-tert-butyl-4-hydroxybenzyl)malonate.
h.9) Hydroxybenzyl aromatics such as, for example, 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, and 2,4,6-tris(3,5-di-tert-butyl-4-hydroxybenzyl)phenol.
h.10)Triazine compounds such as, for example, 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,3,5-triazine, 1,3,5-tris(3,5-di-tert-butyl-4-hydroxybenzyl) isocyanurate, 1,3,5-tris(4-tert-butyl-3-hydroxy-2,6-dimethylbenzyl) isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)hexahydro-1,3,5-triazine, and 1,3,5-tris(3,5-dicyclohexyl-4-hydroxybenzyl) isocyanurate.
h.11)Benzylphosphonates such as, for example, dimethyl 2,5-di-tert-butyl-4-hydroxybenzylphosphonate, diethyl 3,5-di-tert-butyl-4-hydroxybenzylphosphonate (diethyl (3,5-bis(1,1-dimethylethyl)-4-hydroxyphenyl)methylphosphonate), dioctadecyl 3,5-di-tert-butyl-4-hydroxybenzylphosphonate, dioctadecyl 5-tert-butyl-4-hydroxy-3-methylbenzylphosphonate, and the calcium salt of monoethyl 3,5-di-tert-butyl-4-hyd roxybenzylphosphonate.
h.12)Acylaminophenols such as, for example, 4-hydroxylauranilide, 4-hydroxy-stearanilide, 2,4-bisoctylmercapto-6-(3,5-di-(tert-butyl)-4-hydroxyanilino)-s-triazine, and octyl N-(3,5-di-tert-butyl-4-hydroxyphenyl)carbamate.
h.13)Esters of β-(3,5-di-tert-butyl-4-hydroxyphenyl)propionic acid with monohydric or polyhydric alcohols such as, for example, with methanol, ethanol, n-octanol, isooctanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis-(hydroxylethyl)oxalamide, 3-thiaundecanol, 3-thiapentadecanol, trimethylhexane-diol, trimethylolpropane, and 4-hydroxymethyl-1-phospha-2,6,7-trioxabicyclo-[2.2.2]octane.
h.14)Esters of β-(5-tert-butyl-4-hydroxy-3-methylphenyl)propionic acid with monohydric or polyhydric alcohols such as, for example, with methanol, ethanol, n-octanol, isooctanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis-(hydroxylethyl)oxalamide, 3-thiaundecanol, 3-thiapentadecanol, trimethyl-hexanediol, trimethylolpropane, and 4-hydroxymethyl-1-phospha-2,6,7-trioxa-bicyclo[2.2.2]-octane.
h.15)Esters of β-(3,5-dicyclohexyl-4-hydroxyphenyl)propionic acid with monohydric or polyhydric alcohols such as, for example, with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxalamide, 3-thiaundecanol, 3-thiapentadecanol, trimethylhexanediol, trimethylolpropane, and 4-hydroxymethyl-1-phospha-2,6,7-trioxabicyclo[2.2.2]octane.
h.16)Esters of 3,5-di-tert-butyl-4-hydroxyphenylacetic acid with monohydric or polyhydric alcohols such as, for example, with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxalamide, 3-thiaundecanol, 3-thiapentadecanol, trimethylhexanediol, trimethylolpropane, and 4-hydroxymethyl-1-phospha-2,6,7-trioxabicyclo[2.2.2]octane.
h.17)Amides of β-(3,5-di-tert-butyl-4-hydroxyphenyl)propionic acid such as, for example, N,N'-bis(3-(3,5-di-tert-butyl-4-hydroxyphenyl)-propionyl)hexamethylenediamine, N,N'-bis(3-(3,5-di-tert-butyl-4-hydroxyphenyl)-propionyl)trimethylenediamine, N,N'-bis(3-(3,5-di-tert-butyl-4-hydroxyphenyl)-propionyl)hydrazine, N,N'-bis[2-(3-[3,5-di-tert-butyl-4-hydroxyphenyl]propionyloxy)ethyl]oxamide (e.g., Naugard^{®}XL-1 from Uniroyal).
h.18)Ascorbic acid (vitamin C)
h.19)Aminic antioxidants such as, for example, N,N'-diisopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyl-diphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example, p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)-amine, 2,6-di-tert-butyl-4-dimethylaminomethylphenol, 2,4'-diaminodiphenyl-methane, 4,4'-diaminodiphenylmethane, N,N,N',N'-tetramethyl-4,4'-diamino-diphenylmethane, 1,2-bis[(2-methylphenyl)amino]ethane,1,2-bis(phenylamino)-propane, (o-tolyl) biguanide, bis[4-(1',3'-dimethylbutyl)phenyl]amine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyl-diphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylpheno-thiazines, a mixture of mono- and dialkylated tert-octylphenothiazines, N-allylphenothiazine, N,N,N',N'-tetraphenyl-1,4-diaminobut-2-ene, N,N-bis-(2,2,6,6-tetramethylpiperidin-4-yl)hexamethylenediamine, bis(2,2,6,6-tetramethyl-piperidin-4-yl) sebacate, 2,2,6,6-tetramethyl-piperidin-4-one, 2,2,6,6-tetramethyl-piperidin-4-ol, the dimethyl succinate polymer with 4-hydroxy-2,2,6,6-tetramethyl-1-piperidineethanol [CAS number 65447-77-0], (for example, Tinuvin^{®} 622 from Ciba Specialty Chemicals, Switzerland), polymer of 2,2,4,4-tetramethyl-7-oxa-3,20-diazadispiro[5.1.11.2]heneicosan-21-one and epichlorohydrin [CAS No.: 202483-55-4], (for example Hostavin^{®} N30 from Clariant, Frankfurt am Main, Germany.).

Group i) of the sterically hindered amines includes for example bis(2,2,6,6-tetramethyl-4-piperidyl) sebacate, bis(2,2,6,6-tetramethyl-4-piperidyl) succinate, bis(1,2,2,6,6-pentamethyl-4-piperidyl) sebacate, bis(1-octyloxy-2,2,6,6-tetramethyl-4-piperidyl) sebacate, bis(1,2,2,6,6-pentamethyl-4-piperidyl) n-butyl-3,5-di-tert-butyl-4-hydroxybenzylmalonate, condensation product of 1-(2-hydroxyethyl)-2,2,6,6-tetramethyl-4-hydroxypiperidine and succinic acid, the condensation product of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl) nitrilotriacetate, tetra-kis(2,2,6,6-tetramethyl-4-piperidyl) 1,2,3,4-butanetetracarboxylate, 1,1'-(1,2-ethylene)bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethyl-4-piperidyl) 2-n-butyl-2-(2-hydroxy-3,5-di-tert-butylbenzyl)malonate, 3-n-octyl-7,7,9,9-tetramethyl-1,3,8-triazaspiro[4.5]-decane-2,4-dione, bis(1-octyloxy-2,2,6,6-tetramethyl-4-piperidyl) sebacate, bis(1-octyloxy-2,2,6,6-tetramethyl-4-piperidyl) succinate, condensation product of 2-chloro-4,6-bis(4-n-butylamino-2,2,6,6-tetramethyl-4-piperidyl)-1,3,5-triazine and 1,2-bis(3-aminopropylamino)-ethane, condensation product of 2-chloro-4,6-di-(4-n-butylamino-1 ,2,2,6,6-pentamethyl-4-piperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, mixture of 4-hexadecyloxy- and 4-stearyloxy-2,2,6,6-tetramethylpiperidine, condensation product of N,N'-bis(2,2,6,6-tetramethyl-4-piperidyl)hexamethylenediamine and 4-cyclohexylamino-2,6-dichloro-1,3,5-triazine, condensation product of 1,2-bis(3-aminopropylamino)ethane and 2,4,6-trichloro-1,3,5-triazine and also 4-butylamino-2,2,6,6-tetramethylpiperidine, N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxospiro[4.5]decane, condensation product of 7,7,9,9-tetramethyl-2-cycloundecyl-1-oxa-3,8-diaza-4-oxospiro[4.5]decane and epichlorohydrin, poly[methoxypropyl-3-oxo-4-(2,2,6,6-tetramethyl-4-piperidyl)]siloxane, polymer-analogous reaction products derived from 4-amino-2,2,6,6-tetramethylpiperidine and maleic acid/C₂₀-C₂₄-a-Olefin copolymers, e.g., Uvinul^{®} 5050 H (BASF Aktiengesellschaft, Ludwigshafen), and corresponding with polymer-analogous reaction products, 4-amino-1,2,2,6,6-pentamethyl-piperidine (e.g.,"methylated Uvinul^{®} 5050 H"), condensation products of tetramethylolacetylenediurea and 4-amino-2,2,6,6-tetramethylpiperidine, e.g., Uvinul^{®} 4049 H (BASF Aktiengesellschaft, Ludwigshafen), and corresponding condensation products with 4-amino-1,2,2,6,6-pentamethylpiperidine (e.g.,"methylated Uvinul^{®} 4049 H"), poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]] [CAS No. 71878-19-8],

Group j) of the metal deactivators includes for example N,N'-diphenyloxalamide, N-salicylal-N'-salicyloylhydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoylbisphenyl hydrazide, N,N'-diacetyladipic dihydrazide, N,N'-bis(salicyloyl)oxalic dihydrazide, and N,N'-bis(salicyloyl)thiopropionyldihydrazide.

Group k) of the phosphites and phosphonites includes for example triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, bis(2,6-di-tert-butyl-4-methylphenyl) pentaerythritol diphosphite, diisode-cyloxy pentaerythritol diphosphite, bis(2,4-di-tert-butyl-6-methylphenyl) pentaerythritol diphosphite, bis(2,4,6-tris(tert-butylphenyl) pentaerythritol diphosphite, tristearyl sorbitol triphosphite, tetrakis(2,4-di-tert-butylphenyl) 4,4'-biphenylenediphosphonite, 6-isooctyloxy-2,4,8,10-tetra-tert-butyl-dibenzo[d,f][1,3,2]dioxaphosphepine, 6-fluoro-2,4,8,10-tetra-tert-butyl-12-methyldibenzo[d,g][1,3,2]-dioxaphosphocine, bis(2,4-di-tert-butyl-6-methylphenyl) methyl phosphite, bis(2,4-di-tert-butyl-6-methylphenyl) ethyl phosphite, 2,2',2"-nitrilo[triethyl tris(3,3',5,5'-tetra-tert-butyl-1,1'-biphenyl-2,2'-diyl)phosphite], and 2-ethylhexyl 3,3',5,5'-tetra-tert-butyl-1,1'-biphenyl-2,2'-diyl phosphite.

Group I) of the hydroxylamines includes for example N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N-methyl-N-octadecylhydroxylamine, and N,N-dialkylhydroxylamine from hydrogenated tallow fatty amines.

Group m) of the nitrones includes for example N-benzyl α-phenyl nitrone, N-ethyl α-methyl nitrone, N-octyl α-heptyl nitrone, N-lauryl α-undecyl nitrone, N-tetradecyl α-tridecyl nitrone, N-hexadecyl α-pentadecyl nitrone, N-octadecyl α-heptadecyl nitrone, N-hexadecyl α-heptadecyl nitrone, N-octadecyl α-pentadecyl nitrone, N-heptadecyl α-heptadecyl nitrone, N-octadecyl α-hexadecyl nitrone, N-methyl α-heptadecyl nitrone, and nitrones derived from N,N-dialkylhydroxylamines prepared from hydrogenated tallow fatty amines.

Group n) of the amine oxides includes for example amine oxide derivatives as described in U.S. Patents Nos. 5,844,029 and 5,880,191, didecylmethylamine oxide, tridecylamine oxide, tridodecylamine oxide and trihexadecylamine oxide.

Group o) of the benzofuranones and indolinones includes for example those described in US patents 4,325,863; 4,338,244; 5,175,312; 5,216,052; 5,252,643; in DE-A-4316611; in DE-A-4316622; in DE-A-4316876; in EP-A-0589839 or EP-A-0591102, or 3-[4-(2-acetoxyethoxy)phenyl]-5,7-di-tert-butylbenzofuran-2-(3H)-one, 5,7-di-tert-butyl-3-[4-(2-stearoyloxyethoxy)phenyl]benzofuran-2-(3H)-one, 3,3'-bis[5,7-di-tert-butyl-3-(4-[2-hydroxyethoxy]phenyl)benzofuran-2-(3H)-one], 5,7-di-tert-butyl-3-(4-ethoxyphenyl)benzofuran-2-(3H)-one, 3-(4-acetoxy-3,5-dimethylphenyl)-5,7-di-tert-butyl-benzofuran-2-(3H)-one, 3-(3,5-dimethyl-4-pivaloyloxyphenyl)-5,7-di-tert-butyl-benzofuran-2-(3H)-one, 3-(3,4-dimethylphenyl)-5,7-di-tert-butyl-benzofuran-2-(3H)-one, Irganox^{®} HP-136 from Ciba Specialty Chemicals, and 3-(2,3-dimethylphenyl)-5,7-di-tert-butyl-benzofuran-2-(3H)-one.

Group p) of the thiosynergists includes for example dilauryl thiodipropionate or distearyl thiodipropionate.

Group q) of the peroxide scavengers includes for example esters of β-thiodipropionic acid, for example, the lauryl, stearyl, myristyl or tridecyl ester, mercaptobenzimidazole or the zinc salt of 2-mercaptobenzimidazole, zinc dibutyldithiocarbamate, dioctadecyl disulfide, and pentaerythritol tetrakis(β-dodecylmercapto)propionate.

Group r) of the basic costabilizers includes for example melamine, polyvinylpyrrolidone, dicyandiamide, triallylcyanurate; urea derivatives, hydrazine derivatives, amines, polyamides, polyurethanes, alkali metal and alkaline earth metal salts of higher fatty acids, for example, calcium stearate, zinc stearate, magnesium behenate, magnesium stearate, sodium ricinoleate, and potassium palmitate, antimony pyrocatecholate or zinc pyrocatecholate

Group s) of the impact modifiers include for example ethylenevinylacetate copolymers, elastomers such as ABS and nitryl rubbers, polyethers, polysulfones, polyether sulfons, amino-terminated polyethersulfons, polycarbonates or polysiloxanes.

Suitable light stabilizers include, in particular, diphenylcyanoacrylates such as ethyl 2-cyano-3,3-diphenylacrylate, benzotriazoles such as 2-(2'-hydroxyphenyl)-benzotriazoles such as 2-(2'-hydroxy-5'-methylphenyl)benzotriazole, 2-(3',5'-di-tert-butyl-2'-hydroxyphenyl)benzotriazole, 2-(3',5'-di-tert-amyl-2'-hydroxyphenyl)-benzotriazole, 2,2'-methylenebis[4-(1,1,3,3-tetramethylbutyl)-6-benzotriazol-2-ylphenol]; the product of esterifying 2-[3'-tert-butyl-5'-(2-methoxycarbonylethyl)-2'-hydroxyphenyl]-2H-benzotriazole with polyethylene glycol 300; [R-CH₂CH₂-COO(CH₂)₃]₂ where R is 3'-tert-butyl-4'-hydroxy-5'-2H-benzotriazol-2-ylphenyl, and mixtures thereof.

Stabilizers are preferably halogen-free and selected from the group consisting of antioxidants, nitroxyl stabilizers, nitrone stabilizers, amine oxide stabilizers, benzofuranone stabilizers, phosphite and phosphonite stabilizers, quinone methide stabilizers and monoacrylate esters of 2,2'-alkylidenebisphenol stabilizers.

The aromatic and/or heteroaromatic epoxy resin composition may also comprise at least one additive selected from antistatic agents, fillers or reinforcing agents.

Examples of suitable antistatic agents include amine derivatives such as N,N-bis(hydroxyalkyl)alkylamines or -alkylenamines, polyethylene glycol esters and ethers, ethoxylated carboxylic esters and carboxyamides, and glycerol monostearates and distearates, and also mixtures thereof.

Suitable fillers or reinforcing materials comprise, for example, pigments, such as carbon black, graphite, nano-graphite, carbon nanotubes, nanoclay, calcium carbonate, silicates, talc, mica, kaolin, bentonite, hydrotalcite, barium sulfate, metal oxides, metal oxide hydrates, and metal hydroxides, wood flour and fine powders or fibers of other natural products, and synthetic fibers. Examples of suitable fibrous or pulverulent fillers further include reinforcing materials such as carbon fibers or glass fibers in the form of glass fabrics, glass mats or filament glass rovings, chopped glass, glass beads, and wollastonite. Glass fibers can be incorporated both in the form of short glass fibers and in the form of continuous fibers (rovings).

Suitable pigments comprise, for example, carbon black, graphite, titanium dioxide, iron oxide and the like.

Suitable colorants comprise, for example, phthalocyanine dyes.

The compounds from groups a) to r), with the exception of the benzofuranones of group o), are used in typical amounts, in amounts for example of 0.001 % to 10% by weight, preferably 0.01 % to 1% by weight, based on the total weight of the aromatic and/or heteroaromatic epoxy resin composition. The additives of the group s) are used in the typical amounts. Typically they are used in an amount of 0 to 60% by weight, based on the total weight of the aromatic and/or heteroaromatic epoxy resin composition.

The aromatic and/or heteroaromatic epoxy resin composition may further comprise a further flame retardant. Examples for flame retardants, which are optionally present in the aromatic and/or heteroaromatic epoxy resin composition are those selected from the group of the hydroxides, oxides and oxide hydrates of group 2, 4, 12, 13, 14 and 15 (semi)metals, nitrogen-based flame retardants and phosphorus-based flame retardants.

Examples for hydroxides, oxides and oxide hydrates of group 2, 4, 12, 13, 14 and 15 (semi)metals are magnesium oxide or hydroxide, magnesium dihydroxide (MDH), aluminum oxide, aluminum trihydroxide(ATH), boehmite (AI(O)OH), silica, tin oxide, antimony oxide (III and V) and oxide hydrate, titanium oxide, zinc oxide or oxide hydrate, calcium oxide, CaCO₃, (organically modified) layered silicates, (organically modified) layered double hydroxides, and mixtures thereof.

Examples for nitrogen-based flame retardants are for example, isocyanurate flame retardants, such as polyisocyanurate, esters of isocyanuric acid or isocyanurates. Representative examples are hydroxyalkyl isocyanurates, such as tris-(2-hydroxyethyl)isocyanurate, tris(hydroxymethyl)isocyanurate, tris(3-hydroxy-n-proyl)isocyanurate or triglycidyl isocyanurate.

Nitrogen based flame-retardants include further melamine-based flame-retardants. Representative examples are: melamine cyanurate, melamine borate, melamine phosphate, melamine pyrophosphate, melamine polyphosphate, melamine ammonium polyphosphate, melamine ammonium pyrophosphate, dimelamine phosphate and dimelamine pyrophosphate.

Further examples are: benzoguanamine, tris(hydroxyethyl) isocyanurate, allantoin, glycoluril, melamine cyanurate, melamine phosphate, dimelamine phosphate, melamine phenylphosphinate, urea cyanurate, ammonium polyphosphate, a condensation product of melamine from the series melem, melam, melon and/or a higher condensed compound or a reaction product of melamine with phosphoric acid or a mixture thereof.

Examples for phosphorus-based flame retardants are red phosphorus, ammonium polyphosphates, phosphoric esters, in particular triarylphosphates, such as triphenyl phosphate, tribenzyl phosphate, tricresyl phosphate, tri-(dimethylphenyl) phosphate, benzyl dimethylphosphate, di-(dimethylphenyl) phenyl phosphate, resorcinol-bis(diphenyl phosphate), recorcinol-bis-[di-(2,6-dimethylphenyl)-phosphate] (PX-200), aluminum diethylphosphinate (Exolit^{®} OP 1230 and Exolit^{®} OP 930), zinc diethylphosphinate (Exolit^{®} OP 950), aluminum hypophosphite (Flamerphos^{®} A, Phoslite^{®} IP-A), but also aliphatic phosphates, such as tris(2-chloroisopropyl)phosphate (Lupragen^{®} TCPP), aromatic polyphosphates, e.g. polyphosphates derived from bisphenols, such as the compounds described in US 2004/0249022), and phosphonic esters, such as dimethyl-methyl phosphonate and phosphonic acid (2-((hydroxymethyl)carbamyl)ethyl) dimethylester, and polycyclic phosphorus-containing compounds, such as 9,10-dihydro-9-oxa-10-phosphaphenanthrene-10-oxide (DOPO) and mixtures thereof. Especially preferred phosphorus-based flame retardants are oxaphosphorinoxide or a derivative thereof, as represented by formula III, 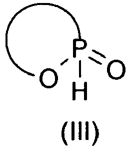 salts of di C₁-C₄-alkylphosphinic acid, triphenylphosphine oxide, melamine phenylphosphonate and melamine polyphosphates.

In the oxaphosphorinoxide(III) the phosphorus atom and one oxygen atom are part of a cyclic structure, particularly a five or six membered ring, and at least one group of the partial formula 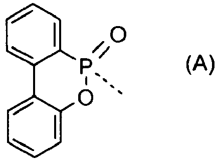 is present.

According to a preferred embodiment, the oxaphosphorinoxide (III) is represented by the following structural formula: 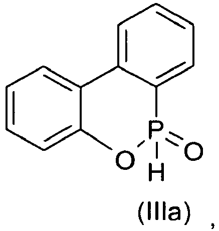 which can be named as 6H-dibenz[c,e][1,2]oxaphosphorin-6-oxide, 3,4:5,6-dibenzo-2H-1,2-oxaphosphorin-2-oxide or 9,10-dihydro-9-oxa-10-phosphorylphenanthrene-10-oxide, abbreviated as DOPO (C.A. RN 35948-25-5). Such compound is commercially available from Sanko Co, Ltd. under the trade name Sanko-HCA.

Suitable derivatives of oxaphosphorinoxide are 9,10-dihydro-9-oxa-10-phosphoryl-phenanthrene-10-oxide (DOPO) are-R-substituted oxaphosphorinoxides of the formula

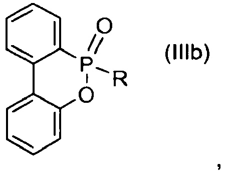

Wherein the phenyl groups may be substituted by additional substituents and R represents C₁-C₁₈alkyl or C₆-C₁₂ aryl, which may be substituted by further substituents. Representative compounds (IIIb) are compounds of the formula:

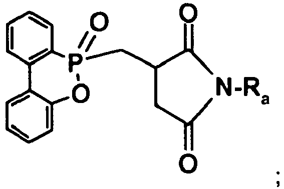

Wherein Rₐ represents hydrogen or C₁-C₄alkyl;

Further representative compounds are:

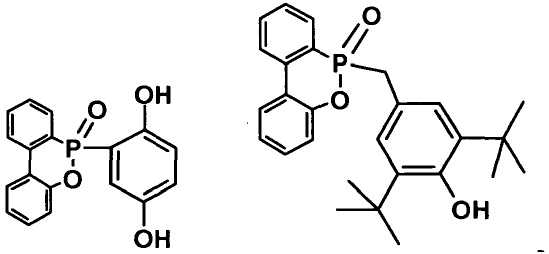

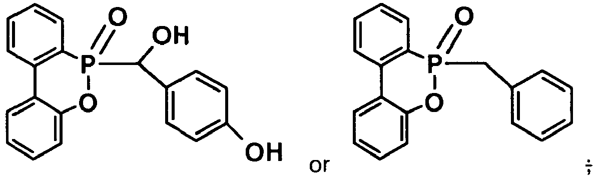

Or compounds wherein R represents alkoxyalkyl substituted by hydroxy, such as the compound of the formula 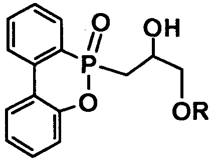 as obtained by reaction of DOPO with epoxides:

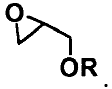

The oxaphosphorinoxides as defined above are known compounds or can be prepared by known methods. Some of them are commercially available.

Further preferred flame retardants which can be combined with at least one compound of formula I and/or II are selected from the group of a salt of di-C₁-C₄alkylphosphinic acid, particularly the Ca²⁺, Zn²⁺, or Al³⁺ salt, as phosphorus-containing flame retardant. The di-C₁-C₄alkylphosphinic acid has identical or different C₁-C₄alkyl groups, such as dimethyl, diethyl, methylethyl or methyl-n-propylphosphinic acid. Such products are known and commercially available (Exolit^{®} OP series, Clariant).

Particularly preferred are the aluminum salts of di-C₁-C₄alkylphosphinic acid, such as dimethylphosphinic acid, diethylphosphinic acid (DEPAL) or methylethylphospinic acid (MEPAL).

Further preferred phosphorus-based flame retardants which can be combined with at least one compound of formula I and/or II are triphenylphosphine oxide as the phosphorus containing flame retardant and melamine phenylphosphonate, as nitrogen containing flame retardant as described in U.S. Pat. Spec. No. 4,061,605 and EP-A-367714.

Other representative phosphorus-containing flame retardants, in addition to the ones defined above, are for example:
Tetraphenyl resorcinol diphosphate (Fyrolflex^{®} RDP), resorcinol diphosphate oligomer (RDP), triphenyl phosphate, ethylenediamine diphosphate (EDAP), diethyl-N,N-bis(2-hydroxyethyl)-aminomethyl phosphonate, hydroxyalkyl esters of phosphorus acids, salts of hypophosphoric acid (H₃PO₂) comprising e.g. Ca²⁺, Zn²⁺, or Al³⁺ as cations, tetrakis(hydroxymethyl)phosphonium sulphide, ammonium polyphosphate and phosphazene flame retardants.

Most especially preferred flame retardants as additional flame retardant in the aromatic and/or heteroaromatic epoxy resin composition are selected from the group of oxaphosphorinoxide or a derivative thereof, as represented by the formula III 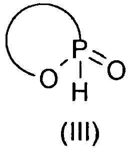 salts of di-C₁-C₄-alkylphosphinic acid, triphenylphosphine oxide, melamine phenylphosphinate, aluminum trihydroxide, aluminum oxide hydroxide, magnesium dihydroxide, calcium oxide, calcium carbonate and melamine polyphosphate.

In one preferred embodiment, the aromatic and/or heteroaromatic epoxy resin composition does not contain a further flame retardant selected from halogen-based flame retardants. In one embodiment, the aromatic and/or heteroaromatic epoxy resin composition material does not contain a further flame retardant apart from the diphosphines of the invention.

In yet another preferred embodiment, the aromatic and/or heteroaromatic epoxy resin composition, apart from the diphosphines of the invention, contains one or more of a further flame retardant and/or a synergist. Synergists are compounds which improve the effect of the proper flame retardant, often in an overadditive (synergistic) manner. Synergists which advantageously can be combined with the diphosphines of the invention are selected from hydroxides, oxides and oxide hydrates of group 2, 4, 12, 13, 14 and 15 (semi)metals, such as magnesium oxide or hydroxide, aluminum oxide, aluminum trihydrate, Al(O)OH, silica, tin oxide, antimony oxide (III and V) and oxide hydrate, titanium oxide and zinc oxide or oxide hydrate, from further zinc compounds, such as zinc borate, zinc stannate or zinc sulfide, from nitrogen-based flame retardants, such as melamine and urea based resins, melamine cyanurate, melamine borate, melamine phosphate, melamine polyphosphate or melamine pyrophosphate, and from phosphorus-based flame retardants, such as phosphinate metal salts, such as aluminum diethylphosphinate (Exolit^{®} OP 1230 and Exolit^{®} OP 930), zinc diethylphosphinate (Exolit^{®} OP 950), phosphates, such as resorcinol-bis[diphenyl phosphate], resorcinol-bis[di-(2,6-dimethylphenyl)-phosphate] (PX-200), or tris(2-chloroisopropyl)phosphate (Lupragen^{®} TCPP), phosphonic esters, such as dimethyl-methyl phosphonate, polycyclic phosphorus-containing compounds, such as 9,10-dihydro-9-oxa-10-phosphaphenanthrene-10-oxide (DOPO) or derivatives thereof. Other synergists can be materials based on the phenolic novolac family, such as those obtained from phenol-formaldehyde condensation reactions. Preferred synergists are Ti(IV) oxide, silicium dioxide, aluminum oxide, aluminum trihydrate, calcium oxide, zinc oxide, zinc borate, magnesium oxide, magnesium hydroxide, melamine and urea based resins, aluminum diethylphosphinates, 9,10-dihydro-9-oxa-10-phosphaphenanthrene-10-oxide, melamine cyanurate, melamine borate and melamine polyphosphates and mixtures thereof.

The above-mentioned additional flame retardant classes are advantageously contained in the aromatic and/or heteroaromatic epoxy resin composition of the invention in an amount from about 0.5% to about 65.0% based on the total weight of the composition; for instance about 1.0% to about 60.0%; for example about 5.0% to about 50.0% based on the total weight of the composition.

As mentioned above, the composition comprising the epoxy resin composition and further polymerizable monomers according to the invention may additionally contain one or more conventional additives, for example selected from pigments, dyes, antioxidants, thixotropic agents, levelling assistants, basic co-stabilizers, metal deactivators, metal oxides, organophosphorus compounds, further light stabilizers and mixtures thereof, especially pigments, phenolic antioxidants, calcium stearate, zinc stearate, UV absorbers of the 2-hydroxy-benzophenone, 3,3-diphenyl-2-cyano acrylates, 2-(2'-hydroxyphenyl)benzotriazole and/or 2-(2-hydroxyphenyl)-1,3,5-triazine groups. Preferred additional additives for the compositions as defined above are processing stabilizers, such as the above-mentioned phosphites and phenolic antioxidants, and light stabilizers, such as benzotriazoles. Preferred specific antioxidants include octadecyl 3-(3,5-di-tert-butyl-4-hydroxyphenyl) propionate (IRGANOX1076), pentaerythritoltetrakis[3-(3,5-di-tert-butyl-4-hydroxyphenyl)propionate] (IRGANOX 1010), tris(3,5-di-tert-butyl-4-hydroxyphenyl)isocyanurate (IRGANOX 3114), 1,3,5-trimethyl-2,4,6-tris(3,5-di-tert-butyl-4-hydroxybenzyl)benzene (IRGANOX 1330), triethyleneglycol-bis[3-(3- tert-butyl-4-hydroxy-5-methylphenyl)propionate] (IRGANOX 245), and N,N'-hexane-1,6-diyl-bis[3-(3,5-di-tert-butyl-4-hydroxyphenyl)propionamide] (IRGANOX 1098). Specific processing stabilizers include tris(2,4-di-tert-butylphenyl) phosphite (IRGAFOS 168), 3,9-bis(2,4-di-tert-butylphenoxy)-2,4,8,10-tetraoxa-3,9-diphosphaspiro[5.5]undecane (IRGAFOS 126), 2,2',2"-nitrilo[triethyl-tris(3,3',5,5'-tetra-tert-butyl-1,1'-biphenyl-2,2'-diyl)]phosphite (IRGAFOS 12), and tetrakis(2,4-di-tert-butylphenyl)[1,1-biphenyl]-4,4'-diylbisphosphonite (IRGAFOS P-EPQ). Specific light stabilizers include 2-(2H-benzotriazole-2-yl)-4,6-bis(1-methyl-1-phenylethyl)phenol (TINUVIN234), 2-(5-chloro(2H)-benzotriazole-2-yl)-4-(methyl)-6-(tert-butyl)phenol (TINUVIN326), 2-(2H-benzotriazole-2-yl)-4-(1,1,3,3-tetramethylbutyl)phenol (TINUVIN329), 2-(2H-benzotriazole-2-yl)-4-(tert-butyl)-6-(sec-butyl)phenol (TINUVIN350), 2,2'-methylenebis(6-(2H-benzotriazol-2-yl)-4-(1,1,3,3-tetramethylbutyl)phenol) (TINUVIN360), and 2-(4,6-diphenyl-1,3,5-triazin-2-yl)-5-[(hexyl)oxy]-phenol (TINUVIN1577), 2-(2'-hydroxy-5'-methylphenyl)benzotriazole (TINUVIN P), 2-hydroxy-4-(octyloxy)-benzophenone (CHIMASSORB 81), 1,3-bis-[(2'-cyano-3',3'-diphenylacryloyl)oxy]-2,2-bis-{[(2'-cyano- 3',3'-diphenylacryloyl)oxy]methyl}-propane (UVINUL 3030, BASF), ethyl-2-cyano-3,3-diphenylacrylate (UVINUL 3035, BASF), 2-hydroxy-4-methoxybenzophenone (UVINUL 3040, BASF), 2,2'-dihydroxy-4,4'-dimethoxybenzophenone (UVINUL 3049, BASF), 2-ethylhexyl-p-methoxy-cinanamate (UVINUL 3088, BASF) and (2-ethylhexyl)-2-cyano-3,3-diphenylacrylate (UVINUL 3039, BASF).

The additives mentioned above are preferably contained in an amount of 0.01 to 10.0%, especially 0.05 to 5.0%, relative to the weight of the aromatic and/or heteroaromatic epoxy resins.

The addition of the additive components to the aromatic and/or heteroaromatic epoxy resin substrate can be carried out in customary mixing machines in which the aromatic and/or heteroaromatic epoxy resin is melted or dissolved in organic solvents and mixed with the additives.

The choice of suitable further additive depends in each case on the specific aromatic and/or heteroaromatic epoxy resin to be processed as well as on its end use and can be established by the skilled person.

Optional co-additives found particularly useful for use with the instant compounds of formula (I) are the above-described synergists, in particular phosphinate metal salts such as Exolit^{®} OP-930, Exolit^{®} OP-950, DOPO or derivatives thereof and aluminum trihydrate and mixtures thereof.

The aromatic and/or heteroaromatic epoxy resin material can be equipped with compounds of formula (I) and/or II (and with the optional additives) before, during or after the preparation of the epoxy resin composition.

The compound(s) of formula (I) and/or (II) and the optional further components may be added to the aromatic and/or heteroaromatic epoxy resin material individually or mixed with one another. If desired, the individual components can be mixed with one another before incorporation into the aromatic and/or heteroaromatic epoxy resin for example by dry blending, in the melt or in solution. If a plurality of components are added, these can be premixed or added individually.

The compounds of formula (I) and (II) can advantageously be added to the aromatic and/or heteroaromatic epoxy resins and or epoxy resin material in the form of coated capsules, the compound of formula (I) and/or (II) forming the capsule core which is surrounded by a suitable coating material. Suitable coating materials are those which protect the cyclic and/or polymeric phosphine of the invention from the detrimental effect which may be caused by oxygen and moisture and which form a suitable coating. Suitable coating materials are the fillers listed in the introductory part, the materials listed as suitable synergists for the diphosphines of the invention and also resins such as melamine resins. Preferably, the coating material is chosen as to provide a flame retardant effect too, and in particular as to act as a synergist for the diphosphines of the invention, i.e. to improve their effectiveness as flame retardants. Preferred coating materials are (semi)metal hydroxides, (semi)metal oxides and (semi)metal oxide hydrates, such as aluminum trihydrate (Al(OH)₃), Al(O)OH (boehmite), calcium oxide, calcium carbonate, magnesium oxide, magnesium hydroxide, zinc hydroxide, zinc oxide, silica, tin oxide, tin oxide hydrate, antimony oxide (III and V) and titanium dioxide, and in particular aluminum trihydrate, optionally in combination with a further hydroxide or oxide, such as magnesium hydroxide, zinc hydroxide, zinc oxide or lead hydroxide. The coating can be carried out in analogy to the coating process described in US 4,210,630, e.g. by treating an aqueous suspension of a compound of formula (I) and (or) (II) with a water soluble salt of one or more of the above-mentioned (semi)metals in the presence of a base, such as an alkali hydroxide or an alkali or earth alkaline carbonate. The resulting (semi)metal hydroxide precipitates on the dispersed particles of the compound of formula (I) and/or (II). Preferably, the coated capsules have a mean (median) diameter of 1 µm to about 100 µm.

Incorporation of the compounds of formula (I) and/or (II) and the optional additives can take place prior to or during resin processing, especially before or during the lamination process.

The materials containing the compounds of formula (I) and/or (II) described herein are for example used for the production of molded articles, resin transfer molding, sheet molding compounds (SMC), bulk molding compounds (BMC), printed circuit boards, printed wiring boards, (pultruded) profiles, mono- and multilayer films, laminates, e.g. textile laminates, composites for planes, trains, coaches, automotive, ships, boats, construction, pipes, winded laminated (tanks), surface coatings and the like.

Preferably, the compounds of formula (I) and/or (II) are incorporated into the epoxy resin material in an amount of from 1 to 35% by weight, more preferably from 1 to 25% by weight, even more preferably from 3 to 20% by weight, based on the weight of the aromatic and/or heteroaromatic epoxy resin material.

In a further aspect, the invention provides a method for flame retarding or reducing the flammability of organic material which comprises incorporating into the material at least one compound of formula I and/or II as defined above. The remarks made above as to preferred embodiments of compounds of formula (I) and/or (II), to suitable and preferred aromatic and/or heteroaromatic epoxy resins material and optional additives and to methods for incorporating the compound of formula (I) and also further optional additives into the aromatic and/or heteroaromatic epoxy resin material apply here, too.

In a further aspect, the invention provides an aromatic and/or heteroaromatic epoxy resin composition, comprising
(a) at least one compound of formula I and/or II as defined above;
(b) and at least one aromatic and/or heteroaromatic epoxy resin and/or an aromatic and/or heteroaromatic epoxy resin containing material,
where the component (a) is comprised in an amount of from 1 to 35% by weight, based on the weight of the aromatic and/or heteroaromatic epoxy resin material.

The remarks made above as to preferred embodiments of compounds of formula (I) and/or (II), to suitable and preferred aromatic and/or heteroaromatic epoxy resin materials and optional additives and to methods for incorporating derivatives of diphosphines of the invention and further optional additives into the aromatic and/or heteroaromatic epoxy resin materials apply here, too.

In particular, the diphosphines of formula (I) will be incorporated in an aromatic and/or heteroaromatic epoxy resin composition as mixture comprising 90 to 97 % by weight of tetraphenyldiphosphine monoxide or monosulfide, 1 to 5 % by weight of tetraphenyldiphosphine dioxide or oxide sulfide, and 0.5 to 2 % by weight of diphenylphosphine oxide or sulfide.

Preferably, the aromatic and/or heteroaromatic epoxy resin composition of the invention comprises the compound of formula (I) and/or (II) in an amount of from 1 to 35% by weight, more preferably from 1 to 25% by weight, even more preferably from 3 to 20% by weight, based on the weight of the aromatic and/or heteroaromatic epoxy resin material. I.

The flame retarding properties of the aromatic and/or heteroaromatic epoxy resin compositions comprising one ore more compounds according to formula (I) and/or (II) are determined in accordance with standard methods used to assess flame retardancy. These include the NFPA 701 Standard Methods of Fire Tests for Flame-Resistant Textiles and Films, 1989 and 1996 editions; the UL 94 Test for Flammability of Plastic Materials for Parts in Devices and Appliances, 5th Edition, Oct. 29, 1996; Limiting Oxygen Index (LOI), ASTM D-2863; and Cone Calorimetry, ASTM E-1354. Ratings according to the UL 94 V test are as compiled in the following table:

| Rating | Afterflame time | Burning drips | Burn to clamp |
|---|---|---|---|
| V-0 | < 10 s | no | no |
| V-1 | < 30 s | no | no |
| V-2 | < 30 s | yes | no |
| Fail | < 30 s | | yes |
| Fail | > 30 s | | no |

The following examples are meant for illustrative purposes only and are not to be construed to limit the scope of this invention.

### Examples

### 1. Preparation of tetraphenyldiphosphine monoxide (compound (I); R¹ - R⁴ = Ph)

Ethoxydiphenylphosphine (552.6g, 2.40mol) were charged into a reactor and heated to an internal temperature of 125-130°C. During 1 h chlordiphenylphosphine (220.6g, 1.0mol) were added in such way, that the resulting ethyl chloride can be conducted safely. Afterwards it is stirred for a further hour before the mixture is cooled down. The resulting crystals were filtered and washed with toluene. The filter cake was dried with the best possible oil pump vacuum at 100°C, yielded 347,7g (0.9mol) 1,1,2,2-tetraphenyldiphosphinmonoxide (90% yield) with a purity of 93-97% (m/m). ³¹P NMR (Toluene-d₈): δ (ppm) = 35.5 (d), 23.0 (d, J = 223 Hz).

### Standard procedure

A resin formulation is prepared by dissolving at 95°C in 100 parts of Araldite® ECN 1280 resin in 25 parts of methoxy-2-propanol. 0.04 parts of 2-methylimidazole, various amounts of tetraphenyldiphosphine monoxide are added to this solution. A clear resin solution is obtained after 10 min at 95°C. To this solution 9.15 parts of DICY dissolved in a 1:1 mixture of methoxy-2-propanol and DMF are added. When indicated, further flame retardant additives and synergists such as melamine polyphosphate (MELAPUR^{®} 200) and aluminum trihydroxide (MARTINAL OL 104 WE) are added to this solution and homogeneously dispersed.

The formulation is hot coated onto a piece of glass cloth (type 7628) and heated to 170°C for about 1 - 3 min in a forced draft oven. The cloth, now a non-tacky prepreg, is cut into seven strips (~ 180 x 180 mm) which are stacked on top of each other in a distance holder to assure the manufacture of laminates with uniform thickness of 1.5 mm. The strips are covered with two PTFE plates of 1 mm thickness on the upper and lower sides of the prepreg stack. The stack is placed on a hot press, and the stacked pre-pregs are subjected to a pressure of 3 bar at 170°C for a period of 2 h.

The resulting laminate is removed from the press, cooled to ambient temperature, and separated from the distance holder and PTFE plates. The laminate is cut to a piece of ~ 150 x 150 mm and weighed. The thickness is measured, and the resin content determined in percent amounts.

### Epoxy flammability testing procedure

The laminate is cut into five strips (125 x 13.0 mm), conditioned for 48 h at 23°C and 50% relative humidity, and tested in the previously described UL-94 flammability test. The data obtained in this test are presented in the Table below.
Reference 1: Laminates are prepared as described above.
Examples 1-6: Laminates are prepared as described above.

The results as shown in the Table below demonstrate that the resin compositions according to the invention exhibit excellent flame retardant properties (UL94 V-1 classification). Resin compositions containing tetraphenyldiphosphine monoxide give laminates with good flame retardancy at relatively low levels of additive loading.

**Table**

| UL94 V (1.4 mm) test results obtained with epoxy laminates containing different flame retardant compositions | | | | |
|---|---|---|---|---|
| Example | FR Additive(s) [wt. %] | Resin (wt.-%) | UL94 rating (1.5 mm) | Total burning time [s] |
| Comp. 1 | w/o | 38.6 | n.c. | 235 |
| Example 1 | 8% TPDM | 38.2 | V-1 | 87 |
| Example 2 | 16% TPDM | 43.3 | V-0 | 31 |
| Example 3 | 11 % TPDM + 5% MELAPUR 200 | 41.4 | V-0 | 27 |
| Example 4 | 8% TDPM + 35% MARTINAL OL 104 WE | 46.3 | V-0 | 19 |
| Example 5 | 5% TDPM + 3% MELAPUR 200 + 35% MARTINAL OL 104 WE | 46.7 | V-0 | 25 |
| Example 6 | 16% TPDS | 41.2 | V-0 | 34 |
| Example 7 | 8% TDPS + 35% MARTINAL OL 104 WE | 46.8 | V-0 | 23 |
| Example 8 | 5% TDPS + 3% MELAPUR 200 + 35% MARTINAL OL 104 WE | 47.5 | V-0 | 16 |
| Example 9 | 16% TPDS-S₂ | 41.0 | V-1 | 63 |
| Example 10 | 8% TPDS-S₂ + 35% MARTINAL OL104WE | 48.1 | V-0 | 24 |
| Example 11 | 5% TPDS-S₂ + 3% MELAPUR 200 + 35% MARTINAL OL 104 WE | 38.9 | V-0 | 40 |

## Claims

1. The use of at least one diphosphine of the formula I or II or a mixture of both 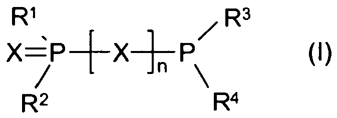 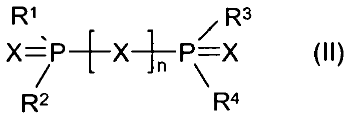 wherein R¹ - R⁴ is independently selected from the group of substituted and/or unsubstituted C₆-C₁₂-aryl, substituted and/or unsubstituted C₆-C₁₂-arylthio and substituted and/or unsubstituted C₆-C₁₂-aryloxy,
X is an element independently selected from oxygen and sulphur and
n is 0, 1 or 2, , wherein X is only sulphur if n is 2 and n is only 0 in formula II, if R¹-R⁴ is C₆-C₁₂ aryloxy,
as flame retardants in aromatic and /or heteroaromatic epoxy resins or aromatic and/or heteroaromatic epoxy resins containing materials.

2. The use as claimed in claim 1, wherein R¹ to R⁴ is C₆-C₁₂ aryl.

3. The use as claimed in any of the preceding claims, wherein R¹ to R⁴ is phenyl.

4. The use as claimed in any of the preceding claims, wherein at least one diphosphine of the formula I or II or a mixture of both is combined with one or more additional flame retardants selected from the group of oxaphosphorinoxide or a derivative thereof, as represented by the formula III 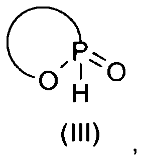 salts of di-C₁-C₄-alkylphosphinic acid, triphenylphosphine oxide, aluminum diethylphosphinate, zinc diethyl phosphinate, melamine phenylphosphonate, aluminum trihydroxide, aluminum oxide hydroxide, magnesium dihydroxide, calcium oxide, calcium carbonate, melamine polyphosphate and melamine cyanurate.

5. The use as claimed in any of the preceding claims, wherein the aromatic and/or heteroaromatic epoxy resins comprise fibers or fiber cloths as reinforcing material.

6. A method for flame retarding or reducing the flammability of organic material which comprises aromatic and/or heteroaromatic epoxy resin as such or in processed form, aromatic and/or heteroaromatic epoxy resin composites or aromatic and/or heteroaromatic epoxy resin blends and incorporating into the aromatic and/or heteroaromatic epoxy resin at least one compound of formula I or II or a mixture of both in any of claims 1 to 4.

7. Aromatic and/or heteroaromatic epoxy resin composition, comprising
a. at least one compound of formula I or II or a mixture of both as defined in any of claims 1 to 4 and
b. at least one aromatic and/or heteroaromatic epoxy resin and/ or aromatic and/or heteroaromatic epoxy resin containing material
wherein the component (a) is comprised in an amount of from 1 to 35% by weight, based on the weight of the aromatic and/or heteroaromatic epoxy resin.

8. The aromatic and/or heteroaromatic epoxy resin composition as claimed in claim 7, wherein the aromatic and/or heteroaromatic epoxy resins comprise fibers or fiber cloths as reinforcing material.

## Patentansprüche

1. Verwendung mindestens eines Diphosphins der Formel I oder II oder einer Mischung davon 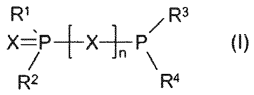 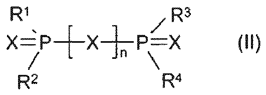 worin R¹-R⁴ unabhängig aus der Gruppe aus substituiertem und/oder unsubstituiertem C₆-C₁₂-Aryl, substituiertem und/oder unsubstituiertem C₆-C₁₂-Arylthio und substituiertem und/oder unsubstituiertem C₆-C₁₂-Aryloxy ausgewählt sind,
X für ein unabhängig aus Sauerstoff und Schwefel ausgewähltes Element steht und
n für 0, 1 oder 2 steht, wobei X nur für Schwefel steht, wenn n für 2 steht, und in Formel II n nur für 0 steht, wenn R¹-R⁴ für C₆-C₁₂-Aryloxy stehen, als Flammschutzmittel in aromatischen und/oder heteroaromatischen Epoxidharzen oder aromatisches und/oder heteroaromatisches Epoxidharz enthaltenden Materialien.

2. Verwendung nach Anspruch 1, wobei R¹ bis R⁴ für C₆-C₁₂-Aryl stehen.

3. Verwendung nach einem der vorhergehenden Ansprüche, wobei R¹ bis R⁴ für Phenyl stehen.

4. Verwendung nach einem der vorhergehenden Ansprüche, wobei mindestens ein Diphosphin der Formel I oder II oder eine Mischung davon mit einem oder mehreren zusätzlichen Flammschutzmitteln aus der Gruppe bestehend aus Oxaphosphorinoxid oder einem Derivat davon gemäß Formel III 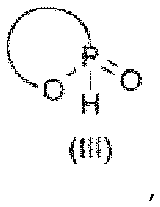 Di-C₁-C₄-alkylphosphinsäuresalzen, Triphenylphosphinoxid, Aluminiumdiethylphosphinat, Zinkdiethylphosphinat, Melaminphenylphosphonat, Aluminiumtrihydroxid, Aluminiumoxidhydroxid, Magnesiumdihydroxid, Calciumoxid, Calciumcarbonat, Melaminpolyphosphat und Melamincyanurat kombiniert wird.

5. Verwendung nach einem der vorhergehenden Ansprüche, wobei die aromatischen und/oder heteroaromatischen Epoxidharze Fasern oder Fasertücher als Verstärkungsmaterial umfassen.

6. Verfahren zur Flammschutzausrüstung oder Verringerung der Entflammbarkeit von organischem Material, das aromatische und/oder heteroaromatische Epoxidharze als solche oder in verarbeiteter Form, aromatisches und/oder heteroaromatisches Epoxidharz enthaltende Verbundwerkstoffe oder aromatisches und/oder heteroaromatisches Epoxidharz enthaltende Blends umfasst, bei dem man in das aromatische und/oder heteroaromatische Epoxidharz mindestens eine Verbindung der Formel I oder II oder eine Mischung davon gemäß einem der Ansprüche 1 bis 4 einarbeitet.

7. Aromatisches und/oder heteroaromatisches Epoxidharz enthaltende Zusammensetzung, umfassend
a. mindestens eine Verbindung der Formel I oder II oder eine Mischung davon gemäß einem der Ansprüche 1 bis 4 und
b. mindestens ein aromatisches und/oder heteroaromatisches Epoxidharz und/oder aromatisches und/oder heteroaromatisches Epoxidharz enthaltendes Material,
wobei die Komponente (a) in einer Menge von 1 bis 35 Gew.-%, bezogen auf das Gewicht des aromatischen und/oder heteroaromatischen Epoxidharzes enthalten ist.

8. Aromatisches und/oder heteroaromatisches Epoxidharz enthaltende Zusammensetzung nach Anspruch 7, wobei die aromatischen und/oder heteroaromatischen Epoxidharze Fasern oder Fasertücher als Verstärkungsmaterial umfassen.

## Revendications

1. Utilisation d'au moins une diphosphine de formule I ou II ou d'un mélange des deux 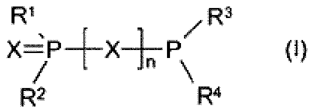 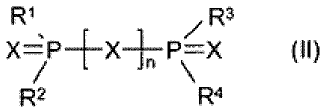 formules dans lesquelles chaque radical R¹ - R⁴ est choisi indépendamment parmi un groupe aryle en C₆-C₁₂ substitué et/ou non substitué, arylthio en C₆-C₁₂ substitué et/ou non substitué et aryloxy en C₆-C₁₂ substitué et/ou non substitué,
X est un élément choisi indépendamment parmi l'oxygène et le soufre et
n est égal à 0, 1 ou 2, où X est seulement le soufre si n est égal à 2 et n est seulement égal à 0 dans la formule II, si chaque radical R¹-R⁴ est un groupe aryloxy en C₆-C₁₂,
en tant qu'ignifugeants dans des résines époxy aromatiques et/ou hétéroaromatiques ou des matériaux contenant des résines époxy aromatiques et/ou hétéroaromatiques.

2. Utilisation selon la revendication 1, dans laquelle chaque radical R¹ à R⁴ représente un groupe aryle en C₆-C₁₂.

3. Utilisation selon l'une quelconque des revendications précédentes, dans laquelle chaque radical R¹ à R⁴ représente un groupe phényle.

4. Utilisation selon l'une quelconque des revendications précédentes, dans laquelle au moins une diphosphine de formule I ou II ou un mélange des deux est combinée avec un ou plusieurs ignifugeants supplémentaires choisis dans le groupe constitué par l'oxyde d'oxaphosphorine ou un de ses dérivés, représenté par la formule III 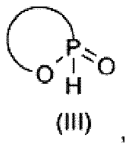 les sels d'acide di-alkyl(en C₁-C₄)phosphinique, l'oxyde de triphénylphosphine, le diéthylphosphinate d'aluminium, diéthylphosphinate de zinc, le phénylphosphonate de mélamine, le trihydroxyde d'aluminium, l'oxyhydroxyde d'aluminium, le dihydroxyde de magnésium, l'oxyde de calcium, le carbonate de calcium, le polyphosphate de mélamine et le cyanurate de mélamine.

5. Utilisation selon l'une quelconque des revendications précédentes, dans laquelle les résines époxy aromatiques et/ou hétéroaromatiques comprennent des fibres ou des tissus de fibres en tant que matériau de renfort.

6. Procédé d'ignifugation ou de réduction de l'inflammabilité d'un matériau organique qui comprend une résine époxy aromatique et/ou hétéroaromatique telle quelle ou sous une forme transformée, des composites de résine époxy aromatique et/ou hétéroaromatique ou des mélanges de résine époxy aromatique et/ou hétéroaromatique et le fait d'incorporer dans la résine époxy aromatique et/ou hétéroaromatique au moins un composé de formule I ou II ou un mélange des deux selon l'une quelconque des revendications 1 à 4.

7. Composition de résine époxy aromatique et/ou hétéroaromatique, comprenant
a. au moins un composé de formule I ou II ou un mélange des deux tel que défini dans l'une quelconque des revendications 1 à 4 et
b. au moins une résine époxy aromatique et/ou hétéroaromatique et/ou un matériau contenant une résine époxy aromatique et/ou hétéroaromatique
dans laquelle le composant (a) est présent à raison de 1 à 35% en poids, par rapport au poids de la résine époxy aromatique et/ou hétéroaromatique.

8. Composition de résine époxy aromatique et/ou hétéroaromatique selon la revendication 7, dans laquelle les résines époxy aromatiques et/ou hétéroaromatiques comprennent des fibres ou des tissus de fibres en tant que matériau de renfort.
